# EUROPÄISCHE PATENTANMELDUNG

(11) **EP 0 659 632 A1**
(43) Veröffentlichungstag der Anmeldung: **28.06.1995**
(21) Anmeldenummer: 94610058.3
(22) Anmeldetag: 23.12.1994
(51) Int. Cl.: B62D 21/20, B62D 63/06

(54) **Anhänger**

(30) Priorität: 23.12.1993 DK 1460/93
(71) Anmelder: Brenderup Trailers A/S, DK-5580 Nr. Aaby (DK)
(72) Erfinder: Justesen, Agner, DK-5464 Brenderup (DK); Schytte, Torben, DK-5260 Odense S (DK)
(74) Vertreter: Brock-Nannestad, George

(57) **Zusammenfassung**

Ein Anhänger umfaßt ein Rahmenfahrgestell, das wenigstens eine Ladefläche (4), z.B. in Form eines Ladekastens, Räder und eine Zugeinrichtung trägt. Um bei solchen Anhängern eine verbesserte Austauschbarkeit von Einzelteilen, insbesondere des Bodens (4), und zugleich einen möglichst universell einsetzbaren Grundaufbau bei günstigen Raum- und Bauverhältnissen zu erreichen, ist eine Konstruktion vorgesehen, bei der entlang der Außenseite der Ladefläche (4) bzw. Ladekastens Träger (8) mit winkeligem Profil verlaufen, die drei im wesentlichen horizontale Anschlagflächen (11,9,10) für Seitenwände (6), Boden (4) bzw. Radachskonsole (3)(-träger) aufweisen, so daß die Seitenwände somit direkt auf den Längsträgern (8) stehen und der Boden (4) mit seinen Randbereichen ebenfalls direkt mit den Längsträgern (8) in Kontakt steht und unabhängig von den Seitenwänden (6) unmittelbar an diesen befestigt werden kann.

## Beschreibung

Die Erfindung betrifft einen Anhänger, umfassend ein Rahmenfahrgestell, das wenigstens eine Ladefläche, z.B. in Form eines Ladekastens, Räder und eine Zugeinrichtung trägt.

Anhänger, vor allem für Personenautos oder kleinere Lieferautos, sind im allgemeinen mit einem Bodenrahmen und einer daraufgesetzten Ladefläche, insbesondere in Kastenform mit Boden und Wänden, die ggf. klappbar sind, aufgebaut. Der Chassisrahmen besteht häufig aus einem Paar Profilschienen, die sich in Längsrichtung des Anhängers erstrecken und auf denen horizontale Querstreben, die den Kasten tragen, und unter denen Konsolen für die Radachse angebracht sind. Weiter trägt der Rahmen eine Zugeinrichtung, die am vorderen Ende mit einer Kupplung versehen ist, die mit einem Zapfen wie einer Kugel am Zugfahrzeug in Eingriff treten kann. Um bei dieser Konstruktion eine zu große Bauhöhe und damit Bodenhöhe zu vermeiden, kann die Zugeinrichtung so eingerichtet sein, daß die Profilschienen durchgehend und gegen die Mittelachse der Anhänger einander nähernd gebogen zur Kupplung geführt sind. Der Boden wird auf den waagerechten Streben befestigt und an den Seitenkanten durch aufwärts gerichtete Winkel abgeschlossen, an denen die Seitenwände, auf den längsseitigen Kanten des Bodens stehend, befestigt werden. Um genügende Stabilität zu erreichen, sind an der vorderen und hinteren Strebe Eckstangen, an denen die Seitenwände befestigt sind, montiert. Die ggf. mittels Scharnieren klappbaren Vorder- und Rückwände des Kastens sind ebenfalls mit diesen Eckstangen verbunden.

Es hat sich gezeigt, daß diese integrierte Konstruktion sowohl bei der Herstellung als auch bei Reparaturen Nachteile hat. Bei diesen Konstruktionen ist in der Regel nicht von einem eigentlichen Chassis die Rede, weil Ladefläche bzw. -kasten wesentlich zur Starrheit der Konstruktion beitragen. Es wäre dann kein produktionsmäßiger Vorteil, eine Anzahl Chassisrahmen für eine Zwischenlagerung im Rahmen einer Vorratshaltung herzustellen, um später die bestellten Anhänger gemäß speziellem Kundenauftrag anzupassen. Dazu sind Änderungen aufgrund von besonderen Bestellungen zu kompliziert, weil fertig hergestellte bzw. vorfabrizierte Anhänger stark geändert werden müssen, bevor die endgültige Fertigstellung stattfinden kann.

Der Boden ist sehr häufig aus einem starken und verhältnismäßig leichten Holzmaterial hergestellt. Er unterliegt jedoch sowohl Fäulnis als auch Verschleiß, und weil er den Träger für die Seitenwände bildet, deren Kanten aus Fertigkeits- und Stabilitätsgründen auf dem Boden selbst stehen, ist es nicht möglich, den Boden auszuwechseln, ohne den ganzen Kasten zu zerlegen.

Es ist Zweck der Erfindung, eine Anhängerkonstruktion der angegebenen Art vorzuschlagen, die die obengenannten Nachteile nicht aufweist.

Diese Aufgabe wird gemäß der Erfindung durch eine Konstruktion gelöst, die sich dadurch auszeichnet, daß entlang der Außenseite der Ladefläche bzw. Ladekastens Träger mit winkeligem Profil verlaufen, die drei im wesentlichen horizontale Anschlagflächen für Seitenwände, Boden bzw. Radachskonsole (-träger) aufweisen. Bei dieser Konstruktion stehen die Seitenwände somit direkt auf den Längsträgern, und der Boden steht mit seinen Randbereichen ebenfalls direkt mit den Längsträgern in Kontakt und kann unabhängig von den Seitenwänden unmittelbar an diesen befestigt werden.

Bei einer vorteilhaften Ausführungsform hat die horizontale Anschlagfläche für eine Seitenwand eine Breite, die der stärksten zur Verwendung gelangenden bzw. anzubringenden Seitenwand entspricht, während sich der Längsträger ist entlang der Außenseite der Seitenwand bis zu einer solchen Höhe fortsetzt, daß die Seitenwand sicher an dem Längsträger befestigt werden kann. Dadurch wird vorteilhaft möglich, die Seitenwand gegen eine stärkere Konstruktion auszutauschen, ohne daß eine eventuell spätere Montage oder Demontage des Bodens behindert wird.

Bei einer weiteren vorteilhaften Ausführungform entspricht der senkrechte Abstand zwischen der Anschlagfläche für eine Seitenwand und der Anschlagfläche für den Boden genau der Stärke des Bodens. Dadurch sind vorteilhaft die Seitenkanten des Bodens ganz geschützt, und es besteht eine ununterbrochene und durchgehende Last- oder Ladefläche, auch im Falle einer extrem dünnen Seitenwand bis an diese heran.

Bei einer anderen vorteilhaften Ausführungsform der Erfindung sind vorn und hinten zwischen den Längsträgern Profile angebracht, die zur Unterstützung der Vorder- und Hinterkante des Bodens dienen und einen Rezeß aufweisen, der der Stärke/Dicke des Bodens entspricht. Dadurch wird insbesondere ein Schutz der Bodenkanten erreicht, selbst wenn diese keinen Beschlag zur Befestigung auf dem Boden umfassen. Damit kann der Boden als Platte ohne weitere Demontage, einmal vom Loschrauben von der starren Chassiskonstruktion abgesehen, ausgewechselt werden.

Durch die Erfindung wird somit insgesamt und im Detail eine Konstruktion geschaffen und bereitgestellt, die eine flexible Herstellung sowie einfache Instandhaltung erlaubt und zusätzlich eine hohe Festigkeit aufweist, indem die Höhe der Längsträger eine große Starrheit begründet. Aufgrund dieses konstruktiven Zusammenspiels zwischen Längsträger, Seitenwänden und Boden ist es obendrein auch möglich, dem Längsträger durch einfache Änderung der Höhe zwischen der Anschlagfläche für den Boden und der Anschlagfläche für die Radachskonsole jede gewünschte Starrheit zu geben. Diese konstruktive Verbesserung erlaubt es, für den Längsträger schwächeres, insbesondere dünneres Material zu verwenden als bei herkömmlichen Profilschienen.

Weitere Vorteile und Ausführungsformen oder -möglichkeiten der Erfindung gehen aus der folgenden Beschreibung der in der schematischen Zeichnung dargestellten Ausführungsbeispiele hervor. Es zeigt
- Fig. 1: einen den Stand der Technik wiedergebenden Aufbau mit Fahrgestell und Ladekasten,
- Fig. 2: eine Konstruktion gemäß der Erfindung,
- Fig. 3: drei Querschnittsdarstellungen im Seitenbereich der erfindungsgemäßen Konstruktion für unterschiedliche Anwendungsfälle von Seitenwänden und
- Fig. 4: einen Querschnitt durch den bei der Erfindung benutzten Längsträger sowie zugehörige vordere und hintere Profile.

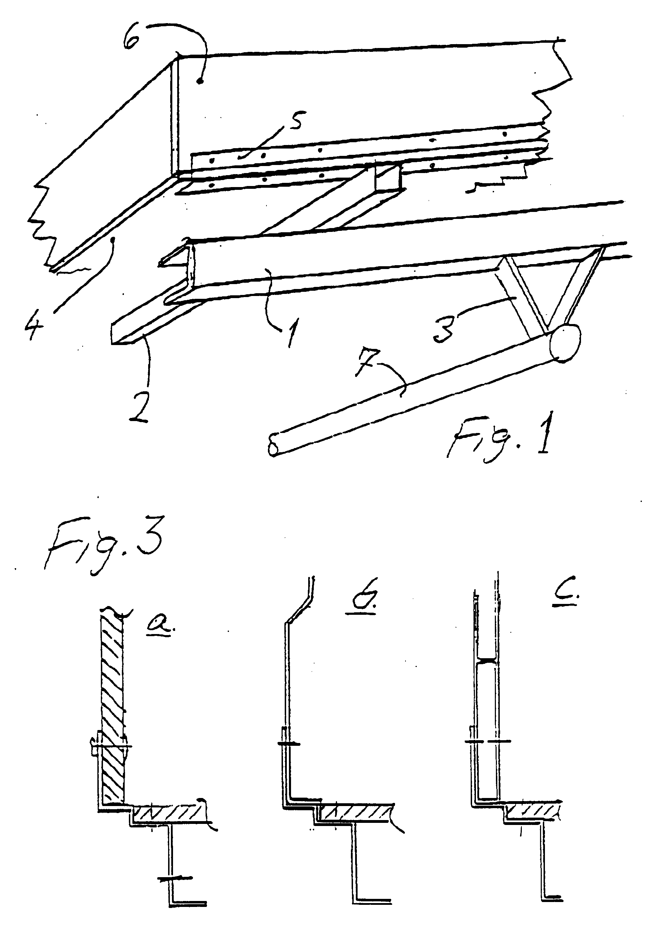

Fig. 1 zeigt in perspektivischer Darstellung schräg von hinten/unten das Prinzip des Aufbaus eines herkömmlichen Anhängers. Der tragende, Kräfte aufnehmende Rahmen umfaßt bei dieser Konstruktion zwei zur Mittelachse symmetrisch angebrachte Profile 1, die aufeinander zulaufend gebogen sind und in ihrem vorderen Bereich einen Haltebeschlag und eine Kupplung tragen. Querstreben 2 sind in geeigneten Abständen auf der Oberseite der Profile angebracht und reichen über die ganze Breite des Anhängers. An der Unterseite der Profile 1 sind Konsolen oder Stützlager 3 für ein Radachsrohr 7 angebracht.

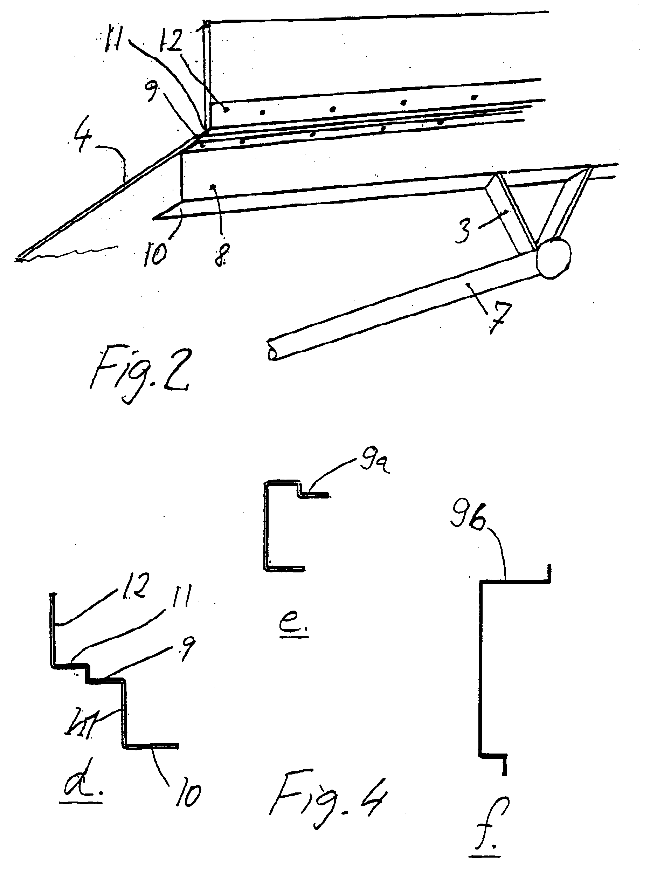

An den Querstreben ist ein Boden 4 befestigt, insbesondere festgenietet, und mittels Winkeln 5, die an der Unterseite des Bodens festgenietet sind, werden Seitenwände 6, die im Randbereich der Bodenoberseite aufstehen, gestützt und festgenietet. Die Stärken der Seitenwände können recht unterschiedlich sein, wie dies in Fig. 3 gezeigt ist, je nachdem, ob es sich z.B. um eine hölzerne, eine stählerne oder eine Alu-Profil-Seitenwand (entsprechend den Schnitten a, b oder c) handelt, und sie stehen dadurch jeweils auf einem mehr oder weniger großen Teil des Randbereiches des Bodens 4 auf.

In Fig. 2 ist ein Aufbau eines Anhängers gemäß der Erfindung in gleicher Betrachtungsrichtung/-winkel wie in Fig. 1. gezeigt. Man erkennt, daß ein Längsträger 8 bis hin zu den Seitenwänden durchgeführt und der Boden 4 unabhängig von den übrigen konstruktiven Elementen auf einer Anschlagfläche 9 des Längsträgers befestigt ist. Die Längsträger 8 nach der Erfindung sind vorn und hinten mit vorderen und hinteren Profilen (nicht gezeigt) verbunden. Zwischen den Längsträgern sind Querstreben angebracht. Horizontale Anschlagflächen 10 der Profile tragen Konsolen 3 für das quer angeordnete Achsgehäuse 7. Die Seitenwände sind auf einer oberen Anschlagfläche 11 aufstehend angebracht und an einem oberen vertikalen Teil 12 der Längsträger 8 vernietet, verbolzt oder sonstwie befestigt. Details dieser Anordnung gehen aus Fig. 3 hervor. An der vorderen Querstrebe befinden sich schrägstehende Trageelemente zur Aufnahme von Zugstäben, die ihrerseits mit der Anhängerkupplung verbunden sind; deswegen kann diese Strebe bevorzugt aus widerstandsfähigem, d.h. ggf. aus stärkerem Material, hergestellt werden.

In Fig. 3 sind verschiedene Seitenwände gezeigt, alle im Randbereich angebracht, und zwar in einer Anordnung gemäß der Erfindung. Bei "a" handelt es sich um eine Holzfiberseitenwand, bei "b" um eine Stahlseitenwand, und bei "c" um eine Aluminiumseitenwand in Form eines extrudierten Hohlprofils.

In Fig. 4 sind ein Längsträger sowie vordere und hintere Profile im Querschnitt dargestellt, um die verschiedenen aktiven Flächen noch deutlicher zu zeigen. Bei "d" wird der eigentliche Längsträger gezeigt, mit einer Anschlagfläche 9 für den Boden, einer Anschlagfläche 10 für die Achsgehäusekonsole, einer Anschlagfläche 11 für die Seitenwand und einer senkrechten Stütze 12 für die Seitenwand. Die Gesamthöhe des Längsträgers ist unmittelbar für dessen Tragkraft und Starrheit ausschlaggebend. Dabei ist die Höhe h1 für den Abstand zwischen Boden und Achsgehäuse und damit für die Höhe über der Fahrbahn mit- bestimmend. Der Längsträger kann vorteilhaft aus gebogenem Stahlblech oder ähnlichem Plattenmaterial hergestellt sein, aber es sind ebenso gut andere Herstellungsarten und -formen sind ebenso möglich. Bei "e" ist ein vorderer Abschluß für den Boden gezeigt; dabei ist eine Fläche 9a vorgesehen, die den Boden schützt und stützt. Ähnlich ist bei "f" ein rückwärtiges Profil mit einer Anschlagfläche 9b für den Boden gezeigt. Das Profil hat eine relativ große Höhe, teils um eine hohe Last im Heckbereich des Anhängers aufnehmen zu können, teils um einen Schutz für das Nummernschild zu bieten.

Aufbau und Anordnung der Erfindung ermöglichen einen sehr flexiblen Aufbau eines Anhängers und zugleich dessen äußerst variable Produktion, indem es möglich ist, eine große Anzahl gleicher Chassis' herzustellen, die für eine Reihe im Detail unterchiedlicher Anhängerversionen benutzt werden können. U. a. ist es einfach, ggf. einen schon fertiggestellten Typ in einen anderen zu ändern, ohne daß ein Eingriff in tragende Teile nötig wird. Insbesondere ist es bis zum End- bzw. Einzel-Fahrzeughändler hin möglich, Änderungen je nach Kundenwunsch auf viel einfachere Weise als bei herkömmlichen Konstruktionen auszuführen und damit weitgehend und schnell speziellen Kaufwünschen nachzukommen.

## Patentansprüche

1. Anhänger, umfassend ein Rahmenfahrgestell, das einen Ladekasten, Räder und eine Zugeinrichtung trägt, **dadurch gekenzeichnet**, daß entlang der Außenseite des Ladekastens Träger (8) mit einem Winkelprofil verlaufen, die drei im wesentlichen horizontale Anschlagflächen (11, 9, 10) für Seitenwände (6), Boden (4) bzw. Radachskonsole (3) aufweisen.

2. Anhänger nach Anspruch 1**, dadurch gekennzeichnet**, daß eine erste horizontale Anschlagfläche (11) für eine Seitenwand eine Breite hat, die der stärksten zur Verwendung gelangenden Seitenwand entspricht, und daß der Längsträger (8) entlang der Außenseite der Seitenwand bis zu einer solchen Höhe (12) fortgesetzt ist, daß die Seitenwand sicher an dem Längsträger befestigbar ist.

3. Anhänger nach Anspruch 1 oder 2, **dadurch gekennzeichnet**, daß der senkrechte Abstand zwischen einer ersten Anschlagfläche (11) für eine Seitenwand und einer zweiten Anschlagfläche für den Boden (9) der Stärke des Bodens entspricht.

4. Anhänger nach einem der Ansprüche 1 bis 3, **dadurch gekennzeichnet**, daß vorn und hinten zwischen den Längsträgern Profile ("e", "f") angebracht sind, die der Unterstützung der Vorder- und Hinterkante des Bodens (4) dienen, wobei diese Profile Rezesse (9a, 9b) aufweisen, die der Stärke des Bodens entsprechen.
